# EUROPEAN PATENT APPLICATION

(11) **EP 4 191 096 A1**
(43) Date of publication of application: **07.06.2023**
(21) Application number: 21851461.0
(22) Date of filing: 31.03.2021
(51) Int. Cl.: F16H 59/14, F16H 61/04, F16H 61/684

(54) **CONTROL DEVICE**

(30) Priority: 30.07.2020 JP 2020129416
(71) Applicant: AISIN CORPORATION, Kariya-shi, Aichi 448-8650 (JP)
(72) Inventor: TANAKA, Masayuki, Anjo-shi, Aichi 444-1192 (JP)
(74) Representative: TBK
(86) International application number: PCT/JP2021/013797
(87) International publication number: WO 2022/024461

(57) **Abstract**

When a control device performs upshifting, the control device performs engagement control in which engagement pressure of a second engagement device is allowed to gradually increase, and disengagement control in which a disengagement force which is a force to disengage a first engagement device is allowed to act on a meshing portion of the first engagement device. In the engagement control, the control device gradually increases engagement pressure of the second engagement device toward target engagement pressure at which transmission torque capacity of the second engagement device reaches a magnitude determined based on input torque from a drive power source to an input member, and makes a change rate of engagement pressure of the second engagement device set at or after a time of reach at which engagement pressure of the second engagement device reaches set engagement pressure which is lower than the target engagement pressure, smaller than a change rate of engagement pressure of the second engagement device set before the time of reach, and starts the disengagement control at or after the time of reach.

## Description

### TECHNICAL FIELD

The present invention relates to a control device whose control target is a vehicle drive transmission device including a transmission that forms a first shift speed in a state in which a first engagement device of a mesh type is engaged and a second engagement device of a friction type is disengaged, and forms a second shift speed having a smaller transmission gear ratio than the first shift speed in a state in which the first engagement device of a mesh type is disengaged and the second engagement device of a friction type is engaged.

### BACKGROUND ART

An example of a control device such as that described above is disclosed in JP 2010-280262 A (Patent Literature 1). Reference signs shown in parentheses in description of BACKGROUND ART below are those of Patent Literature 1. In Patent Literature 1, a stepped transmission (6) that is controlled by a transmission controller (47) is configured to form a low shift speed in a state in which a dog clutch (8) is engaged and a friction clutch (7) is disengaged, and forms a high shift speed in a state in which the dog clutch (8) is disengaged and the friction clutch (7) is engaged. FIG. 5 of Patent Literature 1 shows a flow of a shift control process performed when upshifting in which a shift speed formed by the stepped transmission (6) transitions from the low shift speed to the high shift speed is performed. In a case in which upshifting is performed in accordance with the flow of the shift control process, as described in paragraphs 0055 and 0056 of Patent Literature 1, when a request for upshifting occurs, a disengagement instruction is outputted to an actuator of the dog clutch (8). In addition, a hydraulic pressure target value of the friction clutch (7) is set, and a hydraulic pressure instruction value of the friction clutch (7) is increased to the hydraulic pressure target value at a predetermined rate. With an increase in engagement hydraulic pressure in the friction clutch (7), drive torque transmitted through the dog clutch (8) decreases. Then, as described in paragraph 0057 of Patent Literature 1, when the drive torque transmitted through the dog clutch (8) reaches a predetermined range in which the dog clutch (8) can be disengaged, torque of the above-described actuator for disengaging the dog clutch (8) exceeds the drive torque transmitted through the dog clutch (8), disengaging the dog clutch (8).

### CITATIONS LIST

### PATENT LITERATURE

Patent Literature 1: JP 2010-280262 A

### SUMMARY OF INVENTION

### TECHNICAL PROBLEMS

Meanwhile, in terms of a reduction in time required for upshifting, increasing a change rate of engagement pressure that is set when the engagement pressure of the second engagement device of a friction type (the friction clutch in Patent Literature 1) is increased to target engagement pressure may be considered. However, in an engagement device of a friction type, in general, there are variations in actual engagement pressure with respect to an instruction value of engagement pressure, and thus, when the change rate of engagement pressure of the second engagement device is increased, a situation in which relatively large acceleration fluctuations of a vehicle are induced, e.g., a situation in which the engagement pressure of the second engagement device becomes too high before the first engagement device of a mesh type (the dog clutch in Patent Literature 1) is disengaged, is likely to occur.

Hence, it is desired to implement a technique in which when upshifting is performed, while a reduction in time required for the upshifting is achieved, acceleration fluctuations occurring in the vehicle can be suppressed to a small level.

### SOLUTIONS TO PROBLEMS

A control device according to the present disclosure is a control device whose control target is a vehicle drive transmission device that includes an input member that is drive-coupled to a drive power source; an output member that is drive-coupled to a wheel; and a transmission that includes a first engagement device of a mesh type and a second engagement device of a friction type and that is disposed in a power transmission path between the input member and the output member, the transmission forming a first shift speed in a state in which the first engagement device is engaged and the second engagement device is disengaged, and forming a second shift speed in a state in which the first engagement device is disengaged and the second engagement device is engaged, the second shift speed having a smaller transmission gear ratio than the first shift speed, and when upshifting in which a shift speed formed by the transmission transitions from the first shift speed to the second shift speed is performed, engagement control in which engagement pressure of the second engagement device is allowed to gradually increase, and disengagement control in which a disengagement force is allowed to act on a meshing portion of the first engagement device are performed, the disengagement force being a force to disengage the first engagement device, in the engagement control, engagement pressure of the second engagement device is allowed to gradually increase toward target engagement pressure at which transmission torque capacity of the second engagement device reaches a magnitude determined based on input torque from the drive power source to the input member, and a change rate of engagement pressure of the second engagement device set at or after a time of reach at which engagement pressure of the second engagement device reaches set engagement pressure is made smaller than a change rate of engagement pressure of the second engagement device set before the time of reach, the set engagement pressure being lower than the target engagement pressure, and the disengagement control starts at or after the time of reach.

According to this configuration, when upshifting is performed, engagement control and disengagement control are performed, and thus, when the transmission torque of the first engagement device decreases to less than or equal to a torque level that is determined based on a disengagement force, the first engagement device can be disengaged. Here, in the engagement control, the change rate of engagement pressure of the second engagement device set at or after the time of reach is made smaller than the change rate of engagement pressure of the second engagement device set before the time of reach. Hence, during a period before the time of reach, by increasing the change rate of engagement pressure of the second engagement device, a reduction in time required for upshifting can be achieved. In addition, during a period after the time of reach, by reducing the change rate of engagement pressure of the second engagement device, a situation in which relatively large acceleration fluctuations of a vehicle are induced, e.g., a situation in which the engagement pressure of the second engagement device becomes too high before the first engagement device is disengaged, can be made difficult to occur.

As described above, according to this configuration, when upshifting is performed, it is possible to suppress acceleration fluctuations occurring in the vehicle to a small level while a reduction in time required for the upshifting is achieved. Furthermore, according to this configuration, disengagement control starts at or after the time of reach, and thus, the disengagement control can start after the transmission torque of the first engagement device decreases to a level at which the first engagement device can be disengaged (or a level close thereto). Thus, there is also an advantage in that unnecessary energy consumption caused by too early start timing of disengagement control can be suppressed.

Further features and advantages of the control device will become apparent from the following description of an embodiment which will be described with reference to drawings.

### BRIEF DESCRIPTION OF DRAWINGS

FIG. 1 is a schematic diagram showing an example of a vehicle drive transmission device.
FIG. 2 is a schematic diagram showing another example of a vehicle drive transmission device.
FIG. 3 is a flowchart showing an example of a control flow performed by a control device.
FIG. 4 is a time chart showing an example of control behavior upon upshifting.

### DESCRIPTION OF EMBODIMENTS

An embodiment of a control device will be described with reference to the drawings. In this specification, the term "rotating electrical machine" is used as a concept that includes all of a motor, a generator, and a motor-generator that functions as both a motor and a generator as necessary. In addition, in this specification, the term "drive-coupled" refers to a state in which two rotating elements are coupled together so that the two rotating elements can transmit drive power (the same meaning as torque), and includes a state in which the two rotating elements are coupled together such that the two rotating elements rotate together, or a state in which the two rotating elements are coupled together through one or two or more power transmission members so that the two rotating elements can transmit drive power. Such power transmission members include various types of members (e.g., shafts, gear mechanisms, belts, and chains) that transmit rotation at the same speed or at a changed speed. The power transmission members may include engagement devices (e.g., friction engagement devices and mesh type engagement devices) that selectively transmit rotation and drive power.

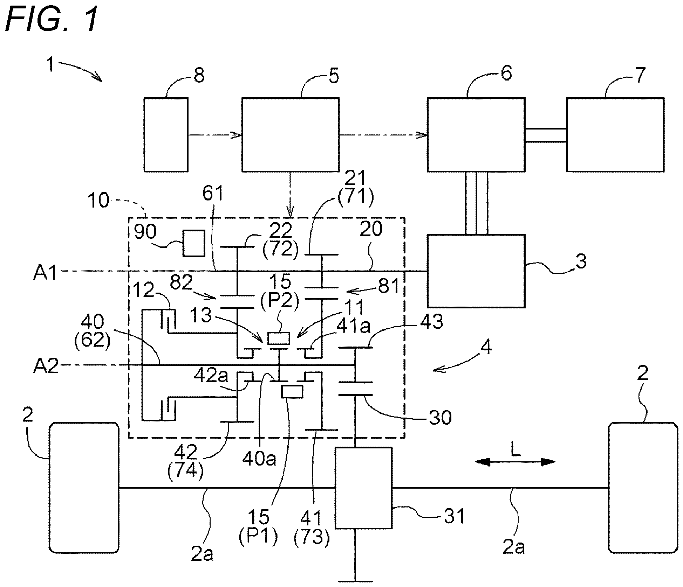

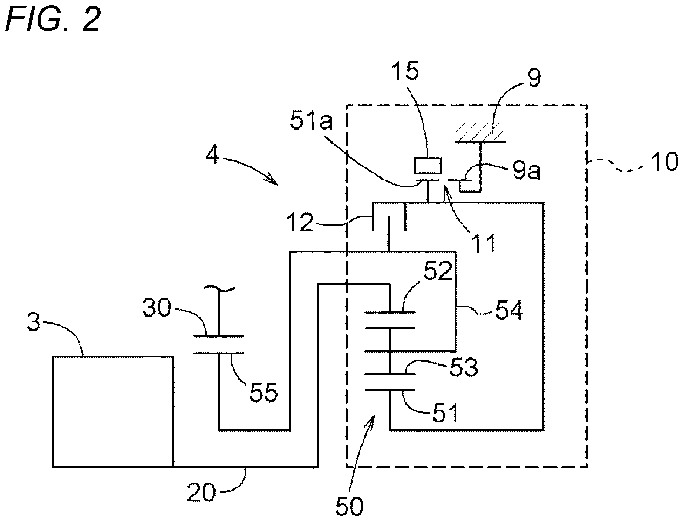

A control device 5 is a control device whose control target is a vehicle drive transmission device 4. An example of the vehicle drive transmission device 4 that can be a control target of the control device 5 is shown in FIG. 1, and another example is shown in FIG. 2. The vehicle drive transmission device 4 which is a control target of the control device 5 is not limited to the vehicle drive transmission devices 4 shown in FIGS. 1 and 2, and may be vehicle drive transmission devices 4 having other configurations.

As shown in FIGS. 1 and 2, the vehicle drive transmission device 4 includes an input member 20 that is drive-coupled to a rotating electrical machine 3; an output member 30 that is drive-coupled to wheels 2; and a transmission 10 disposed in a power transmission path between the input member 20 and the output member 30. Note that in FIGS. 1 and 2, portions having common functions are given the same reference signs, and in FIG. 2, some components in FIG. 1 are omitted. In the present embodiment, the rotating electrical machine 3 corresponds to a "drive power source". The drive power source that is drive-coupled to the input member 20 is not limited to a rotating electrical machine and may be drive power sources of other types (e.g., internal combustion engines such as a gasoline engine and a diesel engine). In addition, the drive power source that is drive-coupled to the input member 20 may be a plurality of drive power sources of the same type or different types.

As shown in FIG. 1, the rotating electrical machine 3 is electrically connected to an electrical storage device 7 such as a battery or a capacitor through an inverter device 6 that performs electric power conversion between direct-current electric power and alternating-current electric power. The rotating electrical machine 3 performs powering by receiving supply of electric power from the electrical storage device 7, or supplies electric power generated by an inertial force of a vehicle 1, etc., to the electrical storage device 7 so that the electric power is stored in the electrical storage device 7. As the rotating electrical machine 3, an alternating-current rotating electrical machine that is driven by three-phase alternating currents (an example of multiphase alternating currents) can be used.

In the two examples shown in FIGS. 1 and 2, the input member 20 is coupled to an output member of the drive power source (here, a rotor shaft of the rotating electrical machine 3) such that the input member 20 rotates together with the output member. In addition, in these two examples, the output member 30 is drive-coupled to the two wheels 2. Specifically, the output member 30 is coupled to the two wheels 2 (e.g., two front wheels or two rear wheels) through an output differential gear device 31. The output differential gear device 31 includes, for example, a differential gear mechanism of a bevel gear type, a planetary gear type, or the like, and distributes rotation of the output member 30 that functions as a differential input gear to the two wheels 2. As shown in FIG. 1, the vehicle 1 is provided with axles 2a that are coupled to the wheels 2. The axles 2a are shaft members (drive shafts) that rotate together with the wheels 2. In the example shown in FIG. 1, the axles 2a couple together the output differential gear device 31 and the wheels 2, and the output differential gear device 31 distributes rotation of the output member 30 to the two axles 2a, thereby distributing the rotation of the output member 30 to the two wheels 2. The output member 30 can also be configured to be drive-coupled to one wheel 2 instead of the two wheels 2 (i.e., one axle 2a instead of the two axles 2a).

The transmission 10 changes the speed of rotation of the input member 20 and transmits the rotation to the output member 30. The transmission 10 is configured to be able to change a transmission gear ratio which is a ratio of the rotational speed of the input member 20 to the rotational speed of the output member 30. The transmission 10 is a stepped automatic transmission that can form a plurality of shift speeds with different transmission gear ratios, and in the present embodiment, the transmission 10 is configured to be able to form a first shift speed and a second shift speed having a smaller transmission gear ratio than the first shift speed. The transmission 10 includes a first engagement device 11 and a second engagement device 12. The transmission 10 is configured to form the first shift speed in a state in which the first engagement device 11 is engaged and the second engagement device 12 is disengaged, and form the second shift speed in a state in which the first engagement device 11 is disengaged and the second engagement device 12 is engaged.

The first engagement device 11 is an engagement device (dog clutch) of a mesh type. The state of engagement of the first engagement device 11 is switched between an engaged state and a disengaged state. The state of engagement of the first engagement device 11 is switched by an actuator 90 such as a motor-driven actuator, a hydraulic actuator, or an electromagnetic actuator. Specifically, as shown in FIGS. 1 and 2, the first engagement device 11 includes a sleeve member 15 that is driven in an axial direction L by the actuator 90, and the state of engagement of the first engagement device 11 is switched based on the location in the axial direction L of the sleeve member 15. Here, the axial direction L is a direction going along an axis on which the first engagement device 11 is disposed (in the example shown in FIG. 1, an axis on which an intermediate member 40 is disposed, and in the example shown in FIG. 2, an axis on which the input member 20 is disposed).

The second engagement device 12 is an engagement device of a friction type. As the second engagement device 12, for example, a multiplate wet clutch can be used. The state of engagement of the second engagement device 12 is switched between a direct-coupling engaged state, a slip-engaged state, and a disengaged state. The state of engagement of the second engagement device 12 is switched by an actuator such as a motor-driven actuator, a hydraulic actuator (a hydraulic servomechanism, etc.), or an electromagnetic actuator. In the direct-coupling engaged state, torque is transmitted between engagement members of the second engagement device 12 by static friction, with no rotational speed difference (slippage) between the engagement members. In the slip-engaged state, torque is transmitted between engagement members of the second engagement device 12 by dynamic friction, with a rotational speed difference between the engagement members. In the engagement device of a friction type, even when an instruction to generate transmission torque capacity is not issued by the control device 5, transmission torque capacity may be generated by dragging between engagement members. In this specification, such drag torque is not taken into account upon classification of the states of engagement, and a state in which transmission torque capacity is generated by dragging between engagement members when an instruction to generate transmission torque capacity is not issued (i.e., a state in which drag torque is generated) is considered a "disengaged state".

In the example shown in FIG. 1, the transmission 10 is a transmission of a parallel-shaft gear type having a configuration in which a plurality of gears disposed on a plurality of parallel shafts mesh with each other. The transmission 10 shown in FIG. 1 includes a first input gear 21 and a second input gear 22, each of which is disposed on the same shaft as the input member 20, and a first intermediate gear 41 and a second intermediate gear 42, each of which is disposed on the same shaft as the intermediate member 40. The intermediate member 40 is disposed on a different shaft from the input member 20 (a shaft parallel to a shaft on which the input member 20 is disposed), and includes a third intermediate gear 43 that meshes with a gear included in the output member 30. The first intermediate gear 41 meshes with the first input gear 21, and the second intermediate gear 42 meshes with the second input gear 22. A gear ratio between the first input gear 21 and the first intermediate gear 41 and a gear ratio between the second input gear 22 and the second intermediate gear 42 are set such that a ratio of the rotational speed of the first input gear 21 to the rotational speed of the first intermediate gear 41 is larger than a ratio of the rotational speed of the second input gear 22 to the rotational speed of the second intermediate gear 42.

In a state in which the first shift speed is formed with the first engagement device 11 being engaged and the second engagement device 12 being disengaged, the input member 20 and the intermediate member 40 are coupled together through a gear pair including the first input gear 21 and the first intermediate gear 41, and the speed of rotation of the input member 20 is changed based on a gear ratio of the gear pair, and the rotation is transmitted to the intermediate member 40. In addition, in a state in which the second shift speed is formed with the first engagement device 11 being disengaged and the second engagement device 12 being engaged, the input member 20 and the intermediate member 40 are coupled together through a gear pair including the second input gear 22 and the second intermediate gear 42, and the speed of rotation of the input member 20 is changed based on a gear ratio of the gear pair, and the rotation is transmitted to the intermediate member 40.

In the example shown in FIG. 1, the first input gear 21 and the second input gear 22 are coupled to the input member 20 such that the first input gear 21 and the second input gear 22 rotate together with the input member 20. The first engagement device 11 selectively couples together the first intermediate gear 41 and the intermediate member 40, and the second engagement device 12 selectively couples together the second intermediate gear 42 and the intermediate member 40. The first shift speed is formed in a state in which the first intermediate gear 41 and the intermediate member 40 are coupled together by engaging the first engagement device 11, and coupling of the second intermediate gear 42 to the intermediate member 40 is released by disengaging the second engagement device 12. In addition, the second shift speed is formed in a state in which coupling of the first intermediate gear 41 to the intermediate member 40 is released by disengaging the first engagement device 11, and the second intermediate gear 42 and the intermediate member 40 are coupled together by engaging the second engagement device 12.

In the example shown in FIG. 1, the sleeve member 15 is disposed such that the sleeve member 15 fits around a third engagement part 40a that rotates together with the intermediate member 40. Namely, the sleeve member 15 rotates together with the intermediate member 40. Specifically, internal teeth formed on an inner circumferential portion of the sleeve member 15 are engaged with external teeth formed on an outer circumferential portion of the third engagement part 40a in such a manner that relative rotation is restricted and relative movement in the axial direction L is allowed (specifically, the internal teeth and the external teeth are spline-engaged). In a state in which the sleeve member 15 has moved to a location in the axial direction L at which the sleeve member 15 is engaged with both of the third engagement part 40a and a first engagement part 41a that rotates together with the first intermediate gear 41 (an engagement location P1 shown in FIG. 1), the first engagement device 11 is engaged, coupling together the first intermediate gear 41 and the intermediate member 40. In this state, the internal teeth formed on the inner circumferential portion of the sleeve member 15 are engaged with both of the external teeth formed on the outer circumferential portion of the third engagement part 40a and external teeth formed on an outer circumferential portion of the first engagement part 41a. In addition, in a state in which the sleeve member 15 has moved to a location in the axial direction L at which the sleeve member 15 is not engaged with the first engagement part 41a (e.g., a disengagement location P2 shown in FIG. 1), the first engagement device 11 is disengaged, releasing coupling of the first intermediate gear 41 to the intermediate member 40.

In the example shown in FIG. 1, the transmission 10 further includes a third engagement device 13. The third engagement device 13 is provided in parallel to the second engagement device 12, and selectively couples together the second intermediate gear 42 and the intermediate member 40. Thus, by engaging the third engagement device 13 instead of the second engagement device 12, too, the second shift speed is formed. The third engagement device 13 is an engagement device of a mesh type. In the example shown in FIG. 1, the first engagement device 11 and the third engagement device 13 are formed using the sleeve member 15 shared thereby, and the state of engagement of the third engagement device 13 is switched based on the location in the axial direction L of the sleeve member 15. Specifically, in a state in which the sleeve member 15 has moved to a location in the axial direction L at which the sleeve member 15 is engaged with both of the third engagement part 40a and a second engagement part 42a that rotates together with the second intermediate gear 42 (a location more to the left in the drawing than the disengagement location P2 shown in FIG. 1), the third engagement device 13 is engaged, coupling together the second intermediate gear 42 and the intermediate member 40. In this state, the internal teeth formed on the inner circumferential portion of the sleeve member 15 are engaged with both of the external teeth formed on the outer circumferential portion of the third engagement part 40a and external teeth formed on an outer circumferential portion of the second engagement part 42a. In addition, in a state in which the sleeve member 15 has moved to a location in the axial direction L at which the sleeve member 15 is not engaged with the second engagement part 42a (e.g., the disengagement location P2 shown in FIG. 1), the third engagement device 13 is disengaged, releasing coupling of the second intermediate gear 42 to the intermediate member 40.

In the example shown in FIG. 2, the transmission 10 is a transmission of a planetary gear type that is formed using one or more planetary gear mechanisms (here, one planetary gear mechanism 50). The planetary gear mechanism 50 is a planetary gear mechanism of a single-pinion type, and includes a sun gear 51, a ring gear 52, and a carrier 54 that rotatably supports a pinion gear 53 that meshes with both of the sun gear 51 and the ring gear 52. The ring gear 52 is coupled to the input member 20 such that the ring gear 52 rotates together with the input member 20, and the carrier 54 is coupled to an output gear 55 that meshes with a gear included in the output member 30, such that the carrier 54 rotates together with the output gear 55.

In the example shown in FIG. 2, the first engagement device 11 selectively fixes the sun gear 51 to a case 9 (an example of a fixing member) of the vehicle drive transmission device 4, and the second engagement device 12 selectively couples together the sun gear 51 and the carrier 54. The first shift speed is formed in a state in which the sun gear 51 is fixed to the case 9 by engaging the first engagement device 11, and coupling of the sun gear 51 to the carrier 54 is released by disengaging the second engagement device 12. In this state, rotation of the input member 20 decelerates based on a gear ratio of the planetary gear mechanism 50, and is transmitted to the output gear 55. In addition, the second shift speed is formed in a state in which the sun gear 51 is detached from the case 9 by disengaging the first engagement device 11, and the sun gear 51 and the carrier 54 are coupled together by engaging the second engagement device 12. In this state, rotation of the input member 20 is transmitted to the output gear 55 at its original rotational speed.

In the example shown in FIG. 2, the sleeve member 15 is disposed such that the sleeve member 15 fits around a fourth engagement part 51a that rotates together with the sun gear 51. Specifically, the internal teeth formed on the inner circumferential portion of the sleeve member 15 are engaged with external teeth formed on an outer circumferential portion of the fourth engagement part 51a in such a manner that relative rotation is restricted and relative movement in the axial direction L is allowed (specifically, the internal teeth and the external teeth are spline-engaged). In a state in which the sleeve member 15 has moved to a location in the axial direction L at which the sleeve member 15 is engaged with both of the fourth engagement part 51a and a fifth engagement part 9a that is fixed to the case 9 (a location more to the right in the drawing than the location of the sleeve member 15 shown in FIG. 2), the first engagement device 11 is engaged, fixing the sun gear 51 to the case 9. In this state, the internal teeth formed on the inner circumferential portion of the sleeve member 15 are engaged with both of the external teeth formed on the outer circumferential portion of the fourth engagement part 51a and external teeth formed on an outer circumferential portion of the fifth engagement part 9a. In addition, in a state in which the sleeve member 15 has moved to a location in the axial direction L at which the sleeve member 15 is not engaged with the fifth engagement part 9a (e.g., the location of the sleeve member 15 shown in FIG. 2), the first engagement device 11 is disengaged, detaching the sun gear 51 from the case 9.

Next, a configuration of the control device 5 will be described. The control device 5 includes, as a core member, an arithmetic processing device such as a central processing unit (CPU) and includes storage devices, such as a random access memory (RAM) and a read only memory (ROM), to which the arithmetic processing device can refer. By software (program) stored in the storage devices such as the ROM or hardware provided separately such as an arithmetic circuit or by both of the software and the hardware, each function of the control device 5 is implemented. The arithmetic processing device included in the control device 5 operates as a computer that executes each program.

As shown in a simplified manner in FIG. 1, the vehicle 1 is provided with a sensor group 8, and the control device 5 is configured to be able to obtain detection information of various types of sensors (sensor detection information) included in the sensor group 8. The sensor detection information includes, for example, information on an accelerator pedal position, information on the amount of brake operation, information on vehicle speed, information on the rotational speed of the input member 20, information on the rotational speed of the output member 30, information on an operation of selecting a range (a travel range, a neutral range, a parking range, etc.) by a driver of the vehicle 1, information on an operation of changing the shift speed (shift operation) by the driver of the vehicle 1, and information on the location or amount of movement in the axial direction L of the sleeve member 15.

When the control device 5 performs upshifting in which a shift speed formed by the transmission 10 transitions from the first shift speed to the second shift speed, the control device 5 performs engagement control and disengagement control. Namely, the control device 5 performs engagement control and disengagement control when the control device 5 performs upshifting by disengaging the first engagement device 11 and engaging the second engagement device 12 in a state in which the first engagement device 11 is engaged and the second engagement device 12 is disengaged (in the example shown in FIG. 1, in a state in which the third engagement device 13 is further disengaged).

Here, the engagement control is control to gradually increase engagement pressure of the second engagement device 12. The control device 5 controls the operation of the actuator of the second engagement device 12 to gradually increase the engagement pressure of the second engagement device 12. In the engagement control, the control device 5 gradually increases the engagement pressure of the second engagement device 12 from zero. The transmission torque capacity (the magnitude of maximum torque that can be transmitted by friction) of the second engagement device 12 increases as the engagement pressure of the second engagement device 12 increases. Hence, the proportion of torque transmitted by the transmission 10 and allocated to the second engagement device 12 increases as the engagement pressure of the second engagement device 12 increases, and accordingly, the transmission torque of the first engagement device 11 decreases.

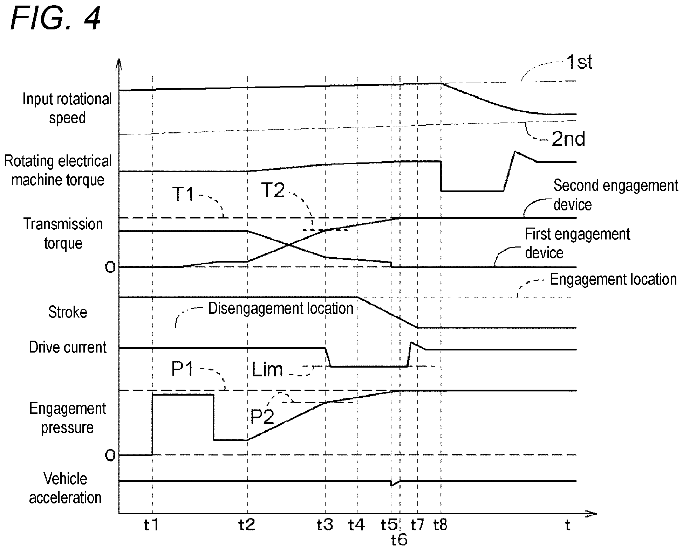

In the present embodiment, in the engagement control, the control device 5 gradually increases the engagement pressure of the second engagement device 12 toward target engagement pressure at which the transmission torque capacity of the second engagement device 12 reaches a magnitude determined based on input torque from the rotating electrical machine 3 to the input member 20 (in an example shown in FIG. 4 which will be referred to later, engagement pressure represented by "P1"). Here, the magnitude determined based on input torque from the rotating electrical machine 3 to the input member 20 is the magnitude of torque obtained by converting the input torque to torque at the second engagement device 12, and is determined based on the magnitude of the input torque and a transmission gear ratio between the input member 20 and the second engagement device 12. Since the engagement pressure of the second engagement device 12 thus gradually increases toward the target engagement pressure, the transmission torque of the first engagement device 11 gradually decreases toward zero.

The disengagement control is control to allow a disengagement force (release force) which is a force to disengage the first engagement device 11 to act on a meshing portion (a portion where teeth mesh together) of the first engagement device 11. The meshing portion of the first engagement device 11 here is a meshing portion in a state in which the first engagement device 11 is engaged. With a decrease in the transmission torque of the first engagement device 11, a friction force acting on the meshing portion of the first engagement device 11 decreases. When the friction force acting on the meshing portion of the first engagement device 11 decreases, by a disengagement force acting on the meshing portion, to a level at which the first engagement device 11 can be disengaged, along with a decrease in the transmission torque of the first engagement device 11, the first engagement device 11 is disengaged by the disengagement force.

The control device 5 controls the operation of the actuator 90 of the first engagement device 11 to allow a disengagement force to act on the meshing portion of the first engagement device 11. In the present embodiment, the actuator 90 of the first engagement device 11 is an actuator that drives the sleeve member 15 in the axial direction L, and the control device 5 controls the operation of the actuator 90 to provide thrust in the axial direction L to the sleeve member 15. The direction of the thrust is a direction in which the sleeve member 15 moves from a location at which the first engagement device 11 is engaged (the engagement location P1, see FIG. 1) toward a location at which the first engagement device 11 is disengaged (the disengagement location P2, see FIG. 1). Note that in FIG. 1, the sleeve member 15 being located at the engagement location P1 is shown below the third engagement part 40a, and the sleeve member 15 being located at the disengagement location P2 is shown above the third engagement part 40a. The thrust in the axial direction L provided to the sleeve member 15 acts, as a disengagement force, on the meshing portion of the first engagement device 11. Namely, in the present embodiment, the disengagement force is a force that allows the sleeve member 15 to move in the axial direction L from the engagement location P1 to the disengagement location P2.

In the example shown in FIG. 1, in the disengagement control, a disengagement force (specifically, a force that allows the sleeve member 15 to move to the left in FIG. 1) is provided to a portion where the internal teeth formed on the inner circumferential portion of the sleeve member 15 and the external teeth formed on the outer circumferential portion of the first engagement part 41a mesh together, and a portion where the internal teeth formed on the inner circumferential portion of the sleeve member 15 and the external teeth formed on the outer circumferential portion of the third engagement part 40a mesh together. In addition, in the example shown in FIG. 2, a disengagement force (specifically, a force that allows the sleeve member 15 to move to the left in FIG. 2) is provided to a portion where the internal teeth formed on the inner circumferential portion of the sleeve member 15 and the external teeth formed on the outer circumferential portion of the fourth engagement part 51a mesh together, and a portion where the internal teeth formed on the inner circumferential portion of the sleeve member 15 and the external teeth formed on the outer circumferential portion of the fifth engagement part 9a mesh together.

The example shown in FIG. 1 will be specifically described below. As shown in FIG. 1, the transmission 10 includes a first rotating member 61, a first gear 71, and a second gear 72 on a first axis A1, and includes a second rotating member 62, a third gear 73 that meshes with the first gear 71, and a fourth gear 74 that meshes with the second gear 72 on a second axis A2 different from the first axis A1. The first gear 71 rotates together with the first rotating member 61, and the third gear 73 is disposed so as to be relatively rotatable to the second rotating member 62. Note that the first axis A1 and the second axis A2 are disposed in parallel to each other. Note also that the first axis A1 and the second axis A2 are imaginary axes.

The first engagement device 11 includes the sleeve member 15 that rotates together with the second rotating member 62; and the first engagement part 41a that rotates together with the third gear 73. The sleeve member 15 can move in the axial direction L (a direction parallel to the first axis A1 and the second axis A2) between the engagement location P1 and the disengagement location P2. Here, the engagement location P1 is a location at which the sleeve member 15 is engaged with the first engagement part 41a, by which the first rotating member 61 and the second rotating member 62 are coupled together through a first gear pair 81 (a gear pair including the first gear 71 and the third gear 73). In addition, the disengagement location P2 is a location at which the engagement of the sleeve member 15 with the first engagement part 41a is released, by which the coupling of the first rotating member 61 to the second rotating member 62 through the first gear pair 81 is released. In the example shown in FIG. 1, the first engagement part 41a corresponds to an "engagement part".

As described above, the first gear 71 rotates together with the first rotating member 61. Hence, in a state in which the first engagement device 11 is engaged (in other words, a state in which the sleeve member 15 is located at the engagement location P1), by the third gear 73 being coupled to the second rotating member 62 such that the third gear 73 and the second rotating member 62 rotate together, the first rotating member 61 and the second rotating member 62 are coupled together through the first gear pair 81. The first shift speed is implemented in a state in which the first rotating member 61 and the second rotating member 62 are coupled together through the first gear pair 81. Namely, the first shift speed is implemented in a state in which the sleeve member 15 is located at the engagement location P1.

The second engagement device 12 is provided so as to adjust transmission torque between the first rotating member 61 and the second rotating member 62 through a second gear pair 82 (a gear pair including the second gear 72 and the fourth gear 74). The second shift speed is implemented in a state in which the first rotating member 61 and the second rotating member 62 are coupled together through the second gear pair 82. Specifically, the second shift speed is implemented in a state in which the first rotating member 61 and the second rotating member 62 are coupled together through the second gear pair 82 and furthermore, coupling of the first rotating member 61 to the second rotating member 62 through the first gear pair 81 is released.

In engagement control, the control device 5 gradually increases transmission torque between the first rotating member 61 and the second rotating member 62 through the second gear pair 82 by gradually increasing engagement pressure of the second engagement device 12, thereby reducing transmission torque between the sleeve member 15 and the first engagement part 41a. In addition, in disengagement control, the control device 5 allows a disengagement force to act on the meshing portion by providing thrust that moves from the engagement location P1 to the disengagement location P2 in the axial direction L to the sleeve member 15.

The first rotating member 61 is drive-coupled to one of the input member 20 and the output member 30 without through the second rotating member 62, and the second rotating member 62 is drive-coupled to the other one of the input member 20 and the output member 30 without through the first rotating member 61. In the example shown in FIG. 1, the first rotating member 61 is drive-coupled to the input member 20 without through the second rotating member 62, and the second rotating member 62 is drive-coupled to the output member 30 without through the first rotating member 61. Specifically, the first axis A1 is an axis on which the input member 20 is disposed, and the first rotating member 61 rotates together with the input member 20. For example, the first rotating member 61 is coupled to the input member 20 such that the first rotating member 61 and the input member 20 rotate together, or is a rotating member shared with the input member 20. In addition, the second axis A2 is an axis on which the intermediate member 40 is disposed, and the second rotating member 62 rotates together with the intermediate member 40. For example, the second rotating member 62 is coupled to the intermediate member 40 such that the second rotating member 62 and the intermediate member 40 rotate together, or is a rotating member shared with the intermediate member 40. In the example shown in FIG. 1, the first gear 71 is the first input gear 21, the second gear 72 is the second input gear 22, the third gear 73 is the first intermediate gear 41, and the fourth gear 74 is the second intermediate gear 42.

In addition, in the example shown in FIG. 1, the second gear 72 rotates together with the first rotating member 61, and the fourth gear 74 is disposed so as to be relatively rotatable to the second rotating member 62. The second engagement device 12 is provided so as to adjust transmission torque between the first rotating member 61 and the second rotating member 62 through the second gear pair 82 by adjusting transmission torque between the fourth gear 74 and the second rotating member 62 (in the example shown in FIG. 1, between the second intermediate gear 42 and the intermediate member 40).

Note that unlike the example shown in FIG. 1, a configuration can also be adopted in which the first rotating member 61 is drive-coupled to the output member 30 without through the second rotating member 62, and the second rotating member 62 is drive-coupled to the input member 20 without through the first rotating member 61. For example, the example shown in FIG. 1 can be changed to the following configuration. The first axis A1 is an axis on which the intermediate member 40 is disposed, and the first rotating member 61 rotates together with the intermediate member 40. For example, the first rotating member 61 is coupled to the intermediate member 40 such that the first rotating member 61 and the intermediate member 40 rotate together, or is a rotating member shared with the intermediate member 40. In addition, the second axis A2 is an axis on which the input member 20 is disposed, and the second rotating member 62 rotates together with the input member 20. For example, the second rotating member 62 is coupled to the input member 20 such that the second rotating member 62 and the input member 20 rotate together, or is a rotating member shared with the input member 20. In this case, the first intermediate gear 41 is the first gear 71, the second intermediate gear 42 is the second gear 72, the first input gear 21 is the third gear 73, and the second input gear 22 is the fourth gear 74.

In addition, unlike the example shown in FIG. 1, a configuration can also be adopted in which the fourth gear 74 rotates together with the second rotating member 62, and the second gear 72 is disposed so as to be relatively rotatable to the first rotating member 61. In this case, the second engagement device 12 is provided so as to adjust transmission torque between the first rotating member 61 and the second rotating member 62 through the second gear pair 82 by adjusting transmission torque between the second gear 72 and the first rotating member 61 (between the second input gear 22 and the input member 20 when the example shown in FIG. 1 is applied).

As described above, when upshifting is performed, engagement control and disengagement control are performed, and when the transmission torque of the first engagement device 11 decreases to less than or equal to a torque level that is determined based on a disengagement force, the first engagement device 11 is disengaged. Upon disengagement of the first engagement device 11, due to a sudden reduction in the transmission torque of the first engagement device 11, there is a possibility that relatively large acceleration fluctuations (specifically, fluctuations in forward and backward acceleration) may occur in the vehicle 1. Here, when considering a simplified model, upon disengagement of the first engagement device 11, torque fluctuations with a magnitude of T0 × N × η occur in the axles 2a, in which T0 is transmission torque immediately before disengagement of the first engagement device 11, N is a reduction ratio from the first engagement device 11 to the axles 2a with the first engagement device 11 being engaged, and η is the transmission efficiency of power from the first engagement device 11 to the axles 2a with the first engagement device 11 being engaged. The transmission efficiency of power is determined based on gear mesh losses, etc.

In the example shown in FIG. 1, a ratio of the rotational speed of the third intermediate gear 43 to the rotational speed of the output member 30 (i.e., a reduction ratio of the output differential gear device 31) is N. When the configuration of the transmission 10 shown in FIG. 1 is changed such that the first intermediate gear 41 is coupled to the intermediate member 40 such that the first intermediate gear 41 rotates together with the intermediate member 40, and the first engagement device 11 selectively couples together the first input gear 21 and the input member 20, the product of the transmission gear ratio of the first shift speed and the reduction ratio of the output differential gear device 31 is N. On the other hand, in the example shown in FIG. 2, the first engagement device 11 is a brake, and in a state in which the first engagement device 11 is engaged, the rotational speed of the first engagement device 11 is zero. In this case, for example, N may be determined such that the reciprocal of a ratio (torque transmission ratio) of the transmission torque (brake torque) of the first engagement device 11 to the torque of the axles 2a when losses are ignored with the first engagement device 11 being engaged and the second engagement device 12 being disengaged is considered as a reduction ratio from the first engagement device 11 to the axles 2a with the first engagement device 11 being engaged. Considering the reduction ratio from the first engagement device 11 to the axles 2a with the first engagement device 11 being engaged as N in this way is equivalent to considering the reciprocal of a torque transmission ratio from the first engagement device 11 to the axles 2a with the first engagement device 11 being engaged (note that losses are ignored) as N.

As described above, when considering the simplified model, torque fluctuations with a magnitude of T0 × N × η occur in the axles 2a upon disengagement of the first engagement device 11. In view of this fact, in the present embodiment, the control device 5 is configured to limit a disengagement force used in disengagement control to less than or equal to a magnitude at which the first engagement device 11 is disengaged in a state in which the transmission torque of the first engagement device 11 is T/(N × η) in which T is the maximum allowed value of torque fluctuations in the axles 2a that is determined based on the maximum allowed value of acceleration fluctuations (specifically, fluctuations in forward and backward acceleration) of the vehicle 1 having the vehicle drive transmission device 4 mounted thereon. By thus limiting the magnitude of the disengagement force, T0 which is transmission torque immediately before disengagement of the first engagement device 11 can be suppressed to T/(N × η) or less. Thus, torque fluctuations occurring in the axles 2a can be suppressed to {T/(N × η)} × N × η or less (i.e., T or less). As a result, it is possible to suppress acceleration fluctuations that can occur in the vehicle 1 to a small level (specifically, to the maximum allowed value or less).

Note that T which is the maximum allowed value of torque fluctuations of the axles 2a can be a value derived from G × M × g × r in which G is the maximum allowed value of acceleration fluctuations (specifically, fluctuations in forward and backward acceleration) of the vehicle 1 (note that the maximum allowed value is a numerical value represented by a system of units in which gravitational acceleration is 1), M is the weight of the vehicle 1, r is the radius (specifically, dynamic radius) of the wheels 2, and g is the gravitational acceleration (specifically, standard gravitational acceleration). It is preferred that the value "G" be set to a value at which an occupant of the vehicle 1 does not feel acceleration fluctuations of the vehicle 1. It is preferred that the value "G" be, for example, 0.1 or less, preferably, 0.05 or less, and more preferably, 0.03 or less.

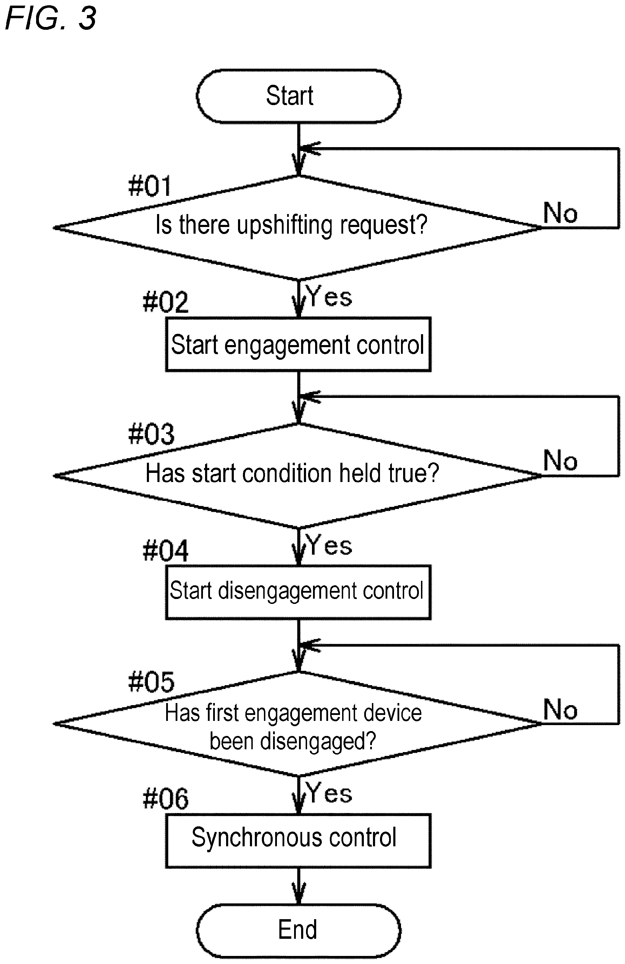

When the control device 5 performs upshifting in which a shift speed formed by the transmission 10 transitions from the first shift speed to the second shift speed, the control device 5 performs engagement control and disengagement control in accordance with, for example, a processing procedure of FIG. 3. When there is an upshifting request (step #01: Yes), the control device 5 starts engagement control (step #02). The control device 5 determines that there is an upshifting request, for example, when a target shift speed determined based on sensor detection information (e.g., information on an accelerator pedal position and vehicle speed) has been changed from the first shift speed to the second shift speed or when a shift operation from the first shift speed to the second shift speed performed by the driver of the vehicle 1 has been detected.

After starting the engagement control, the control device 5 determines whether a start condition for disengagement control has held true (step #03), and if it is determined that the start condition has held true (step #03: Yes), then the control device 5 starts disengagement control (step #04). As such, when upshifting is performed in accordance with the procedure shown in FIG. 3, the control device 5 starts, after starting engagement control, disengagement control when the start condition for disengagement control has held true, instead of starting disengagement control concurrently with the start of engagement control. Then, after starting the disengagement control, the control device 5 determines whether the first engagement device 11 has been disengaged (step #05). The control device 5 determines whether the first engagement device 11 has been disengaged, based on sensor detection information. For example, it is possible to adopt a configuration in which when the sleeve member 15 has moved to a specified location, it is determined that the first engagement device 11 has been disengaged, or a configuration in which when the amount of movement in the axial direction L of the sleeve member 15 has reached a specified amount, it is determined that the first engagement device 11 has been disengaged.

During a period before the first engagement device 11 has been disengaged (step #05: No), the control device 5 continuously performs disengagement control, and when the first engagement device 11 has been disengaged (step #05: Yes), the control device 5 terminates the engagement control and the disengagement control. Then, the control device 5 performs synchronous control in which, with a rotational speed of the input member 20, which is determined based on the rotational speed of the output member 30 and the transmission gear ratio of the second shift speed, being a synchronous rotational speed, input torque from the rotating electrical machine 3 to the input member 20 is controlled such that the rotational speed of the input member 20 approaches the synchronous rotational speed (step #06), by which the upshifting is completed. The synchronous rotational speed is specifically a rotational speed obtained by multiplying the rotational speed of the output member 30 by the transmission gear ratio of the second shift speed. The control device 5 controls the input torque such that the rotational speed of the input member 20 approaches the synchronous rotational speed, by controlling the operation of the inverter device 6 to control output torque of the rotating electrical machine 3. When, like the vehicle drive transmission device 4 exemplified in FIG. 1, the vehicle drive transmission device 4 includes the third engagement device 13 in parallel to the second engagement device 12, the control device 5 performs, for example, control to engage the third engagement device 13 and disengage the second engagement device 12 after completion of synchronous control.

FIG. 4 shows an example of control behavior exhibited when the control device 5 performs upshifting in accordance with the processing procedure shown in FIG. 3. FIG. 4 shows, from top to bottom, a graph of an input rotational speed which is the rotational speed of the input member 20, a graph of rotating electrical machine torque which is the output torque of the rotating electrical machine 3, a graph of transmission torque of each of the first engagement device 11 and the second engagement device 12, a graph of a stroke (a location in the axial direction L) of the sleeve member 15 included in the first engagement device 11, a graph of a drive current that drives the motor-driven actuator of the first engagement device 11, a graph of engagement pressure (specifically, an instruction value of engagement pressure) of the second engagement device 12, and a graph of vehicle acceleration which is the acceleration of the vehicle 1. In the graph of an input rotational speed, a rotational speed represented by "1st" is a rotational speed obtained by multiplying the rotational speed of the output member 30 by the transmission gear ratio of the first shift speed, and a rotational speed represented by "2nd" is a rotational speed (the above-described synchronous rotational speed) obtained by multiplying the rotational speed of the output member 30 by the transmission gear ratio of the second shift speed.

In FIG. 4, a situation is assumed in which at a point in time before time 11, the vehicle 1 is traveling, with the first engagement device 11 being engaged and the second engagement device 12 being disengaged (i.e., with the transmission 10 forming the first shift speed). When there is an upshifting request at time 11, the control device 5 starts engagement control. Here, a case is assumed in which the actuator of the second engagement device 12 is a hydraulic actuator (specifically, a hydraulic servomechanism). Hence, at time t1 at which the engagement control starts, the control device 5 starts preparation control for increasing the engagement pressure of the second engagement device 12 (specifically, control to pre-fill hydraulic oil). Thereafter, at time t2, the control device 5 starts control to gradually increase the engagement pressure of the second engagement device 12 (specifically, gradually increase the engagement pressure from a value obtained after pre-filling hydraulic oil).

At or after time t2, the transmission torque of the first engagement device 11 decreases as the engagement pressure of the second engagement device 12 increases. In the example shown in FIG. 4, at or after time t2, the output torque of the rotating electrical machine 3 gradually increases so as to compensate for a reduction in wheel transmission torque (torque transmitted from a transmission 10 side to the wheels 2) caused by a reduction in transmission gear ratio. In FIG. 4, a case is assumed in which the control device 5 makes a change rate of engagement pressure of the second engagement device 12 set at or after a time of reach at which the engagement pressure of the second engagement device 12 reaches set engagement pressure which is lower than target engagement pressure, smaller than a change rate of engagement pressure of the second engagement device 12 set before the time of reach. As described above, the target engagement pressure is engagement pressure at which the transmission torque capacity of the second engagement device 12 reaches a magnitude determined based on input torque from the rotating electrical machine 3 to the input member 20. In FIG. 4, engagement pressure represented by "P1" is the target engagement pressure, engagement pressure represented by "P2" is the set engagement pressure, and time t3 is the time of reach.

In terms of a reduction in time required for upshifting, increasing the change rate of engagement pressure of the second engagement device 12 in engagement control may be considered. However, in the second engagement device 12 of a friction type, in general, there are variations in actual engagement pressure with respect to an instruction value of engagement pressure, and thus, when the change rate of engagement pressure of the second engagement device 12 is large, a situation in which torque fluctuations of the axles 2a are induced (e.g., a situation in which the actual engagement pressure of the second engagement device 12 becomes too high before the first engagement device 11 is disengaged) is likely to occur. When the control device 5 makes the change rate of engagement pressure of the second engagement device 12 set at or after the time of reach smaller than the change rate of engagement pressure of the second engagement device 12 set before the time of reach, while a reduction in time required for upshifting is achieved by increasing the change rate of engagement pressure of the second engagement device 12 during a period before the time of reach, the change rate of engagement pressure of the second engagement device 12 is reduced during a period after the time of reach, by which a situation in which torque fluctuations of the axles 2a are induced can be made difficult to occur.

As shown in FIG. 4, when the engagement pressure of the second engagement device 12 reaches the set engagement pressure at time t3, the control device 5 starts disengagement control. Namely, in the example shown in FIG. 4, the start condition for disengagement control (step #03 of FIG. 3) is that the engagement pressure of the second engagement device 12 has reached the set engagement pressure. As such, here, a case is assumed in which the control device 5 starts disengagement control at or after the time of reach at which the engagement pressure of the second engagement device 12 reaches the set engagement pressure, and in FIG. 4, the control device 5 starts disengagement control at the time of reach. The control device 5 determines that the engagement pressure of the second engagement device 12 has reached the set engagement pressure (in other words, the time of reach has been reached), for example, based on an instruction value of engagement pressure of the second engagement device 12 and when the instruction value has reached the set engagement pressure. Alternatively, the control device 5 determines that the engagement pressure of the second engagement device 12 has reached the set engagement pressure, for example, when time elapsed from the time of starting a gradual increase in engagement pressure of the second engagement device 12 has passed set time (e.g., time set based on learning).

When the control device 5 starts disengagement control at or after the time of reach, by appropriately setting the set engagement pressure, the disengagement control can start after the transmission torque of the first engagement device 11 decreases to a level at which the first engagement device 11 can be disengaged (or a level close thereto). Hence, unnecessary energy consumption caused by too early start timing of disengagement control is easily suppressed.

When the control device 5 starts disengagement control at time t3, the control device 5 controls the operation of the actuator 90 of the first engagement device 11 to allow a disengagement force to act on the meshing portion of the first engagement device 11. As described above, in the present embodiment, the control device 5 limits the disengagement force used in the disengagement control to less than or equal to a magnitude at which the first engagement device 11 is disengaged in a state in which the transmission torque of the first engagement device 11 is T/(N × η). In FIG. 4, a case is assumed in which the actuator 90 of the first engagement device 11 is a motor-driven actuator, and a disengagement force with a magnitude determined based on a drive current applied to the motor-driven actuator acts on the meshing portion of the first engagement device 11. The control device 5 limits a disengagement force used in disengagement control to less than or equal to the above-described magnitude by limiting a drive current applied to the motor-driven actuator of the first engagement device 11.

In FIG. 4, a case is assumed in which a disengagement force increases as the absolute value of a negative drive current applied to the motor-driven actuator of the first engagement device 11 increases, and when the drive current is a negative current represented by "Lim", the disengagement force acting on the meshing portion of the first engagement device 11 has a magnitude at which the first engagement device 11 is disengaged in a state in which the transmission torque of the first engagement device 11 is T/(N × η). Hence, by limiting the absolute value of a negative drive current applied to the motor-driven actuator of the first engagement device 11 to less than or equal to the absolute value of the negative current represented by "Lim", the disengagement force acting on the meshing portion of the first engagement device 11 has the above-described magnitude or less. FIG. 4 exemplifies a case in which the control device 5 performs control such that the negative drive current applied to the motor-driven actuator of the first engagement device 11 matches the negative current represented by "Lim". As such, in the example shown in FIG. 4, in disengagement control, the control device 5 performs disengagement force maintenance control in which control is performed to make the magnitude of a disengagement force constant. In FIG. 4, a case is assumed in which the actuator 90 that switches between engagement and disengagement of the first engagement device 11 is a motor-driven actuator that generates drive power with a magnitude determined based on the magnitude of a drive current, and thus, the disengagement force maintenance control is control to maintain the drive current at a constant magnitude.

In FIG. 4, at time t4 after starting the disengagement control, the transmission torque of the first engagement device 11 decreases by a disengagement force acting on the meshing portion of the first engagement device 11 to a level at which the sleeve member 15 can move in the axial direction L, and the sleeve member 15 starts to move from a location (engagement location P1) at which the first engagement device 11 is engaged toward a location (disengagement location P2) at which the first engagement device 11 is disengaged. Then, at time t5, when the transmission torque of the first engagement device 11 decreases by a disengagement force acting on the meshing portion to a level at which the first engagement device 11 can be disengaged, the first engagement device 11 is disengaged by the disengagement force. With the disengagement of the first engagement device 11, the transmission torque of the first engagement device 11 suddenly becomes zero, by which at time t5, acceleration fluctuations occur in the vehicle 1. Thereafter, when the engagement pressure of the second engagement device 12 reaches the target engagement pressure (the engagement pressure represented by "P1") at time t6 and the sleeve member 15 reaches the disengagement location P2 at time t7, the control device 5 starts the above-described synchronous control (step #06 of FIG. 3) at time t8, and when the rotational speed of the input member 20 reaches the synchronous rotational speed (the rotational speed represented by "2nd" in FIG. 4), the upshifting is completed. Though depiction is omitted, the control device 5 thereafter performs, for example, control to engage the third engagement device 13 and disengage the second engagement device 12, or control to increase the engagement pressure of the second engagement device 12 (e.g., increase the engagement pressure to line pressure). Note that the disengagement location P2 is set to a location at which even if acceleration and deceleration of the vehicle 1, etc., are considered, it is guaranteed that the first engagement device 11 is securely disengaged.

Meanwhile, as shown in FIG. 4, when the transmission torque of the second engagement device 12 increases as the engagement pressure of the second engagement device 12 increases, by which the engagement pressure of the second engagement device 12 reaches the target engagement pressure (the engagement pressure represented by "P1"), the transmission torque of the second engagement device 12 reaches target torque (torque represented by "T1") determined based on input torque from the rotating electrical machine 3 to the input member 20. In FIG. 4, the transmission torque of the second engagement device 12 at a point in time at which the engagement pressure of the second engagement device 12 reaches the set engagement pressure (the engagement pressure represented by "P2") is set torque (torque represented by "T2") smaller than the target torque. Hence, in the example shown in FIG. 4, disengagement control starts at or after a point in time at which the transmission torque of the second engagement device 12 reaches the set torque (specifically, at the point in time). Note that the set torque may be different from transmission torque of the second engagement device 12 obtained at a point in time at which the engagement pressure of the second engagement device 12 reaches the set engagement pressure.

As such, in the example shown in FIG. 4, the control device 5 starts disengagement control at or after a point in time at which the transmission torque of the second engagement device 12 reaches set torque smaller than target torque which is determined based on input torque from the rotating electrical machine 3 to the input member 20 (here, at the point in time). In this case, by appropriately setting the set torque, disengagement control can start after the transmission torque of the first engagement device 11 that decreases with an increase in the transmission torque of the second engagement device 12 decreases to a level at which the first engagement device 11 can be disengaged (or a level close thereto). Hence, unnecessary energy consumption caused by too early start timing of disengagement control is easily suppressed.

When the control device 5 is configured to start disengagement control at or after a point in time at which the transmission torque of the second engagement device 12 reaches the set torque, the start condition for disengagement control (step #03 of FIG. 3) can be that the transmission torque of the second engagement device 12 has reached the set torque. The control device 5 determines that the transmission torque of the second engagement device 12 has reached the set torque, for example, based on an estimated value of transmission torque of the second engagement device 12 and when the estimated value has reached the set torque.

### [Other embodiments]

Next, other embodiments of the control device will be described.
(1) In FIG. 4, as an example, a case is described in which in engagement control, the control device 5 makes a change rate of engagement pressure of the second engagement device 12 set at or after the time of reach at which the engagement pressure of the second engagement device 12 reaches set engagement pressure which is lower than target engagement pressure, smaller than a change rate of engagement pressure of the second engagement device 12 set before the time of reach. However, the present disclosure is not limited to such a configuration, and for example, in engagement control, the control device 5 may gradually increase the engagement pressure of the second engagement device 12 at a constant change rate until the engagement pressure reaches the target engagement pressure.
(2) In FIG. 4, as an example, a case is described in which the control device 5 starts disengagement control at the time of reach at which the engagement pressure of the second engagement device 12 reaches the set engagement pressure. However, the present disclosure is not limited to such a configuration, and a configuration can also be adopted in which the control device 5 starts disengagement control at a later point in time than the time of reach. In addition, a configuration can also be adopted in which the control device 5 starts disengagement control at an earlier point in time than the time of reach. For example, a configuration can be adopted in which the control device 5 starts disengagement control simultaneously with or at the same timing as engagement control.
(3) In FIG. 4, as an example, a case is described in which the control device 5 starts disengagement control at a point in time at which the transmission torque of the second engagement device 12 reaches set torque. However, the present disclosure is not limited to such a configuration, and a configuration can also be adopted in which the control device 5 starts disengagement control at a later point in time than the above-described point in time. In addition, a configuration can also be adopted in which the control device 5 starts disengagement control at an earlier point in time than the above-described point in time. For example, a configuration can be adopted in which the control device 5 starts disengagement control simultaneously with or at the same timing as engagement control.
(4) Note that a configuration disclosed in each of the above-described embodiments can also be applied in combination with configurations disclosed in other embodiments (including a combination of embodiments described as other embodiments) as long as a contradiction does not arise. For other configurations, too, the embodiments disclosed in this specification are in all respects merely illustrative. Thus, various modifications can be made therein as appropriate without departing from the true spirit and scope of the present disclosure.

### [Summary of the present embodiment]

A summary of a control device described above will be described below.

In a control device (5) whose control target is a vehicle drive transmission device (4) that includes an input member (20) that is drive-coupled to a drive power source (3); an output member (30) that is drive-coupled to a wheel (2); and a transmission (10) that includes a first engagement device (11) of a mesh type and a second engagement device (12) of a friction type and that is disposed in a power transmission path between the input member (20) and the output member (30), the transmission (10) forming a first shift speed in a state in which the first engagement device (11) is engaged and the second engagement device (12) is disengaged, and forming a second shift speed having a smaller transmission gear ratio than the first shift speed in a state in which the first engagement device (11) is disengaged and the second engagement device (12) is engaged, when upshifting in which a shift speed formed by the transmission (10) transitions from the first shift speed to the second shift speed is performed, engagement control in which engagement pressure of the second engagement device (12) is allowed to gradually increase, and disengagement control in which a disengagement force which is a force to disengage the first engagement device (11) is allowed to act on a meshing portion of the first engagement device (11) are performed, in the engagement control, engagement pressure of the second engagement device (12) is allowed to gradually increase toward target engagement pressure at which transmission torque capacity of the second engagement device (12) reaches a magnitude determined based on input torque from the drive power source (3) to the input member (20), and a change rate of engagement pressure of the second engagement device (12) set at or after a time of reach at which engagement pressure of the second engagement device (12) reaches set engagement pressure which is lower than the target engagement pressure is made smaller than a change rate of engagement pressure of the second engagement device (12) set before the time of reach, and the disengagement control starts at or after the time of reach.

According to this configuration, when upshifting is performed, engagement control and disengagement control are performed, and thus, when the transmission torque of the first engagement device (11) decreases to less than or equal to a torque level that is determined based on a disengagement force, the first engagement device (11) can be disengaged. Here, in the engagement control, a change rate of engagement pressure of the second engagement device (12) set at or after the time of reach is made smaller than a change rate of engagement pressure of the second engagement device (12) set before the time of reach. Hence, during a period before the time of reach, by increasing the change rate of engagement pressure of the second engagement device (12), a reduction in time required for upshifting can be achieved. In addition, during a period after the time of reach, by reducing the change rate of engagement pressure of the second engagement device (12), a situation in which relatively large acceleration fluctuations of a vehicle (1) are induced, e.g., a situation in which the engagement pressure of the second engagement device (12) becomes too high before the first engagement device (11) is disengaged, can be made difficult to occur.

As described above, according to this configuration, when upshifting is performed, it is possible to suppress acceleration fluctuations occurring in the vehicle (1) to a small level while a reduction in time required for the upshifting is achieved. Furthermore, according to this configuration, disengagement control starts at or after the time of reach, and thus, the disengagement control can start after the transmission torque of the first engagement device (11) decreases to a level at which the first engagement device (11) can be disengaged (or a level close thereto). Thus, there is also an advantage in that unnecessary energy consumption caused by too early start timing of disengagement control can be suppressed.

Here, it is preferred that in the disengagement control, disengagement force maintenance control in which control is performed to make the magnitude of the disengagement force constant be performed.

Upon disengagement of the first engagement device (11), acceleration fluctuations with a magnitude based on the magnitude of transmission torque of the first engagement device (11) at the time of the disengagement can occur in the vehicle (1). According to this configuration, in disengagement control, disengagement force maintenance control in which control is performed to make the magnitude of a disengagement force constant is performed, and thus, variations in acceleration fluctuations occurring in the vehicle (1) upon disengagement of the first engagement device (11) can be suppressed to a small level, by which acceleration fluctuations occurring in the vehicle (1) upon disengagement of the first engagement device (11) are easily suppressed to a small level.

In a configuration in which, as described above, in the disengagement control, the disengagement force maintenance control is performed, it is preferred that an actuator (90) that switches between engagement and disengagement of the first engagement device (11) be a motor-driven actuator that generates drive power with a magnitude determined based on the magnitude of a drive current, and the disengagement force maintenance control be control to maintain the drive current at a constant magnitude.

According to this configuration, when the actuator (90) of the first engagement device (11) is a motor-driven actuator, disengagement force maintenance control can be appropriately performed.

In the control device (5) of each of the above-described configurations, it is preferred that the transmission (10) include a first rotating member (61), a first gear (71), and a second gear (72) on a first axis (A1), and include a second rotating member (62), a third gear (73) that meshes with the first gear (71), and a fourth gear (74) that meshes with the second gear (72) on a second axis (A2) different from the first axis (A1), the first gear (71) rotate together with the first rotating member (61), the third gear (73) be disposed so as to be relatively rotatable to the second rotating member (62), the first shift speed be implemented in a state in which the first rotating member (61) and the second rotating member (62) are coupled together through a first gear pair (81) which is a gear pair including the first gear (71) and the third gear (73), the second shift speed be implemented in a state in which the first rotating member (61) and the second rotating member (62) are coupled together through a second gear pair (82) which is a gear pair including the second gear (72) and the fourth gear (74), the first engagement device (11) include a sleeve member (15) that rotates together with the second rotating member (62); and an engagement part (41a) that rotates together with the third gear (73), the sleeve member (15) be able to move in an axial direction (L) between an engagement location (P1) at which the first rotating member (61) and the second rotating member (62) are coupled together through the first gear pair (81) by engaging the sleeve member (15) with the engagement part (41a), and a disengagement location (P2) at which coupling of the first rotating member (61) to the second rotating member (62) through the first gear pair (81) is released by releasing engagement of the sleeve member (15) with the engagement part (41a), the second engagement device (12) be provided so as to adjust transmission torque between the first rotating member (61) and the second rotating member (62) through the second gear pair (82), in the engagement control, transmission torque between the sleeve member (15) and the engagement part (41a) be reduced by gradually increasing transmission torque between the first rotating member (61) and the second rotating member (62) through the second gear pair (82) by gradually increasing engagement pressure of the second engagement device (12), and in the disengagement control, the disengagement force be allowed to act on the meshing portion by providing thrust that moves from the engagement location (P1) to the disengagement location (P2) in the axial direction (L) to the sleeve member (15).

When the transmission (10) is configured in the above-described manner, by disengaging the first engagement device (11) by moving the sleeve member (15) located at the engagement location (P1) to the disengagement location (P2), upshifting can be performed. According to this configuration, when upshifting is thus performed, in a process in which the transmission torque of the first engagement device (11) (specifically, transmission torque between the sleeve member (15) and the engagement part (41a)) decreases with performance of engagement control, by performing disengagement control, the sleeve member (15) moves from the engagement location (P1) to the disengagement location (P2) by thrust provided to the sleeve member (15), by which the first engagement device (11) can be disengaged. Thus, when the transmission (10) is configured in the above-described manner, by performing engagement control and disengagement control, upshifting can be appropriately performed.

The control device according to the present disclosure can provide at least one of the above-described advantageous effects.

### REFERENCE SIGNS LIST

2: Wheel, 3: Rotating electrical machine (drive power source), 4: Vehicle drive transmission device, 5: Control device, 10: Transmission, 11: First engagement device, 12: Second engagement device, 15: Sleeve member, 20: Input member, 30: Output member, 41a: First engagement part (engagement part), 61: First rotating member, 62: Second rotating member, 71: First gear, 72: Second gear, 73: Third gear, 74: Fourth gear, 81: First gear pair, 82: Second gear pair, 90: Actuator, A1: First axis, A2: Second axis, L: Axial direction, P1: Engagement location, and P2: Disengagement location

## Claims

1. A control device whose control target is a vehicle drive transmission device that includes an input member that is drive-coupled to a drive power source; an output member that is drive-coupled to a wheel; and a transmission that includes a first engagement device of a mesh type and a second engagement device of a friction type and that is disposed in a power transmission path between the input member and the output member, the transmission forming a first shift speed in a state in which the first engagement device is engaged and the second engagement device is disengaged, and forming a second shift speed in a state in which the first engagement device is disengaged and the second engagement device is engaged, the second shift speed having a smaller transmission gear ratio than the first shift speed,
wherein
when upshifting in which a shift speed formed by the transmission transitions from the first shift speed to the second shift speed is performed, engagement control in which engagement pressure of the second engagement device is allowed to gradually increase, and disengagement control in which a disengagement force is allowed to act on a meshing portion of the first engagement device are performed, the disengagement force being a force to disengage the first engagement device,
in the engagement control, engagement pressure of the second engagement device is allowed to gradually increase toward target engagement pressure at which transmission torque capacity of the second engagement device reaches a magnitude determined based on input torque from the drive power source to the input member, and
a change rate of engagement pressure of the second engagement device set at or after a time of reach at which engagement pressure of the second engagement device reaches set engagement pressure is made smaller than a change rate of engagement pressure of the second engagement device set before the time of reach, the set engagement pressure being lower than the target engagement pressure, and
the disengagement control starts at or after the time of reach.

2. The control device according to claim 1, wherein in the disengagement control, disengagement force maintenance control in which control is performed to make a magnitude of the disengagement force constant is performed.

3. The control device according to claim 2, wherein
an actuator that switches between engagement and disengagement of the first engagement device is a motor-driven actuator that generates drive power with a magnitude determined based on a magnitude of a drive current, and
the disengagement force maintenance control is control to maintain the drive current at a constant magnitude.

4. The control device according to any of claims 1 to 3, wherein
the transmission includes a first rotating member, a first gear, and a second gear on a first axis, and includes a second rotating member, a third gear that meshes with the first gear, and a fourth gear that meshes with the second gear on a second axis different from the first axis,
the first gear rotates together with the first rotating member,
the third gear is disposed so as to be relatively rotatable to the second rotating member,
the first shift speed is implemented in a state in which the first rotating member and the second rotating member are coupled together through a first gear pair, the first gear pair being a gear pair including the first gear and the third gear,
the second shift speed is implemented in a state in which the first rotating member and the second rotating member are coupled together through a second gear pair, the second gear pair being a gear pair including the second gear and the fourth gear,
the first engagement device includes a sleeve member that rotates together with the second rotating member; and an engagement part that rotates together with the third gear,
the sleeve member can move in an axial direction between an engagement location at which the first rotating member and the second rotating member are coupled together through the first gear pair by engaging the sleeve member with the engagement part, and a disengagement location at which coupling of the first rotating member to the second rotating member through the first gear pair is released by releasing engagement of the sleeve member with the engagement part,
the second engagement device is provided so as to adjust transmission torque between the first rotating member and the second rotating member through the second gear pair,
in the engagement control, transmission torque between the sleeve member and the engagement part is reduced by gradually increasing transmission torque between the first rotating member and the second rotating member through the second gear pair by gradually increasing engagement pressure of the second engagement device, and
in the disengagement control, the disengagement force is allowed to act on the meshing portion by providing thrust to the sleeve member, the thrust moving from the engagement location to the disengagement location in the axial direction.
